# EUROPÄISCHE PATENTSCHRIFT

(11) **EP 1 572 815 B1**
(45) Veröffentlichungstag und Bekanntmachung des Hinweises auf die Patenterteilung: **17.10.2018**
(21) Anmeldenummer: 03767815.8
(22) Anmeldetag: 17.12.2003
(51) Int. Cl.: C09D 5/18, C09K 21/12, D06N 3/00, D06M 11/72

(54) **INTUMESZIERENDER KÖRPER**
INTUMESCENT BODY
ELEMENT INTUMESCENT

(30) Priorität: 20.12.2002 DE 10261213
(43) Veröffentlichungstag der Anmeldung: 14.09.2005
(73) Patentinhaber: Raymaster Holding Aktiengesellschaft, 6301 Zug (CH)
(72) Erfinder: LEUCHT, Thomas, 95213 Münchberg (DE); OBERNOSTERER, Hannes, 6300 Zug (CH)
(74) Vertreter: Dr. Gassner & Partner mbB
(86) Internationale Anmeldenummer: PCT/EP2003/014399
(87) Internationale Veröffentlichungsnummer: WO 2004/058902

(56) Entgegenhaltungen:
- EP-A- 0 669 418
- EP-A- 1 048 778
- WO-A-00/56839
- DE-A- 4 343 664
- US-B1- 6 248 820

## Beschreibung

Die Erfindung betrifft einen intumeszierenden Körper nach dem Oberbegriff des Anspruchs 1 sowie eine Verwendung nach Anspruch 17.

Die Erfindung betrifft allgemein das Gebiet flammhemmender intumeszierender Materialien bzw. Massen. Flammhemmende intumeszierende Massen sind u.a. mit einem Treibmittel und einem Flammhemmmittel versehene Kunstharze oder wässrige Kunstharzdispersionen, die bei Einwirkung von Hitze einen aus Kohlenstoff bestehenden Schaum bilden. Der Kunstharz dient dabei im Wesentlichen als Kohlenstofflieferant. Der Kohlenstoffschaum weist im Vergleich zur ursprünglichen Dicke der Überzugsmasse ein 10 bis 100-faches Volumen auf. Wegen seiner sehr geringen Wärmeleitfähigkeit schützt der Schaum ein damit überzogenes Material vor der Einwirkung von Flammen.

Die DE 197 51 434 A1 beschreibt einen gattungsgemäßen intumeszierenden Körper. Der Körper ist aus einem die Form des Körpers bildenden nicht-intumeszierenden Polymermaterial, beispielsweise Kunststoff, und einer auf das Polymermaterial aufgebrachten intumeszierenden Überzugsmasse hergestellt. Die bekannte Überzugsmasse eignet sich mangels ausreichender Transparenz insbesondere nicht zur Beschichtung bedruckter Textilien.

Aus der DE 38 01 456 A1 ist ein Verfahren zur Herstellung flammwidrig ausgerüsteter Polyurethanmassen bekannt. Es wird dabei auf einen Zusatz von Halogen- und/oder Schwermetallverbindungen verzichtet, welche bei einem Brand gesundheitsschädliche Gase bilden.

Die DE 40 41 470 A1 beschreibt eine intumeszierende Textilie, bei der zwischen zwei miteinander verbundenen Textilenflä-chengebilden eine Schicht eines körnigen Intumeszenzmittels vorgesehen ist.

Aus der DE 43 43 668 A1 ist eine intumeszierende flammhemmende Überzugsmasse bekannt, der als Flammhemmmittel u.a. Ammoniumpolyphosphat zugesetzt ist. Die Überzugsmasse enthält ferner als Treibmittel Melamin. Die bekannte Überzugsmasse eignet sich in Folge ihrer mangelnden Transparenz nicht zur Beschichtung bedruckter Textilien.

Die DE 196 08 612 C2 offenbart eine flammhemmende intumeszierende Überzugsmasse, die als Kunstharz Epoxydharz enthält. Die Überzugsmasse ist lösungsmittelhaltig; es können bis zu 65 Gew.% an Füllstoffen zugesetzt sein. Auch diese Überzugsmasse ist zur Beschichtung von Textilien nicht geeignet.

US6248820 offenbart ein Maschentuch bevorzugt aus Polyester beschichtet mit einer Beschichtungszusammensetzung enthaltend a) 140 Teilen (37 Gew. %) EVA (50 Gew. % Feststoff), b) 100 Teilen (26 Gew. %) Polyurethan (30 Gew. % Feststoff), c) 2 Teilen (0.52 Gew. %) Isocyanat, d) 40 Teilen (10 Gew. %) Ammoniumpolyphosphat, e) 3 Teilen (0.78 Gew. %) roten Phosphor und f) 100 Teilen (26 Gew. %) Ammoniumhydroxid.

Um eine ausreichende Wirksamkeit zu gewährleisten, müssen intumeszierende Überzugsmassen in einer ausreichenden Schichtdicke auf den zu schützenden Körper aufgebracht werden. Das erhöht das Gewicht des Körpers. Eine solche Gewichtserhöhung ist insbesondere bei Körpern zur Verwendung in der Luftfahrtindustrie oder bei Textilien unerwünscht. Abgesehen davon erfordert die Herstellung herkömmlicher intumeszierender Überzugsmassen die Bereitstellung und Verarbeitung einer Vielzahl von unterschiedlichen Komponenten. Das erhöht unerwünschterweise deren Herstellungsaufwand. Schließlich weisen herkömmliche intumeszierende Überzugsmassen keine oder nur eine geringe Transparenz auf. Das schränkt die Freiheiten in der Oberflächengestaltung von mit intumeszierenden Massen zu überziehenden Körpern erheblich ein.

Aufgabe der Erfindung ist es, die Nachteile nach dem Stand der Technik zu beseitigen. Es soll insbesondere ein intumeszierendes System angegeben werden, das ein möglichst geringes Gewicht aufweist und ferner einfach und kostengünstig herstellbar ist. Des Weiteren soll eine Überzugsmasse des intumeszierenden Systems eine möglichst hohe Transparenz aufweisen, um beispielsweise einen auf einer Oberfläche des Körpers vorgesehener Aufdruck nicht zu beeinträchtigen.

Diese Aufgabe wird gelöst durch Intumeszierender Körper hergestellt aus einem die Form des Körpers bildenden nicht-intumeszierenden Polymermaterial, welches eine Differenz AT zwischen einer Schmelztemperatur Ts und einer Kristallisationstemperatur Tc des Polymermaterials im Bereich von 55 bis 70 K aufweist, und einer auf das Polymermaterial aufgebrachten transparenten Überzugsmasse,wobei die Überzugsmasse die folgende Zusammensetzung aufweist:25 bis 95 Gew.% einer Polyurethan oder Polyacrylat enthaltenden wässrigen Dispersion,0,5 bis 10 Gew.% eines Isocyanats oder eines Melamin-Formaldehyds und3 bis 15 Gew.% Ammoniumpolyphosphat als Flammhemmmittel,wobei das Polymermaterial zusammen mit der Überzugsmasse ein intumeszierendes System ergibt, bei dem die Überzugsmasse im Brandfalle ins Innere des eine Kohlenstoff-lieferende Komponente bildenden Polymermaterials eindringt und unter Mitwirkung des Polymermaterials eine flammlöschende Schaumentwicklung stattfindet, wobei das Polymermaterial einen Anteil von zumindest 20 Gew.% des Kohlenstoffs im intumeszierenden System bereitstellt.

Nach Maßgabe der Erfindung ist vorgesehen, dass das Polymermaterial zusammen mit der Überzugsmasse ein intumeszierendes System ergibt, bei dem das Polymermaterial eine Kohlenstoff-liefernde Komponente bildet. - In Abkehr vom Stand der Technik sind die Komponenten des intumeszierenden Systems nicht mehr ausschließlich in einem Stoff bzw. einer Masse mit intumeszierenden Eigenschaften enthalten. Ein wesentlicher Anteil des für die flammhemmende Wirkung nach dem Intumeszenzprinzip notwendigen Kohlenstoffs wird durch das mit der Überzugsmasse beschichtete Polymermaterial bereitgestellt. Infolgedessen kann auf den gesonderten Zusatz einer Kohlenstoff-liefernden Komponente in der Überzugsmasse verzichtet werden. Eine solche Überzugsmasse ohne Kohlenstoff-liefernde Komponente kann in einer hervorragenden Transparenz hergestellt werden. Zum Erreichen einer intumeszierenden Wirkung muss die Überzugsmasse lediglich in einer geringen Schichtdicke aufgebracht werden. Das mit der Überzugsmasse beschichtete Polymermaterial ist besonders leichtgewichtig. Es eignet sich insbesondere zur Herstellung von Textilien, Bauteilen für Fahrzeuge, Flugzeuge, Schiffe usw..

Nach einer vorteilhaften Ausgestaltung weist das Polymermaterial einen Kohlenstoffgehalt von ≥ 20 Gew.% auf. Derartige Polymermaterialien eignen sich besonders gut als Bestandteil des intumeszierenden Systems. Zweckmäßigerweise stellt das Polymermaterial aber einen höheren Anteil an Kohlenstoff bereit, vorzugsweise zumindest 30 Gew.% und besonders bevorzugt zumindest 40 Gew.%. Die Überzugsmasse enthält ebenfalls Kohlenstoff und dient insoweit ebenfalls als Kohlenstofflieferant. Ein wesentlicher Anteil des Kohlenstoffs im intumeszierenden System wird aber durch das Polymermaterial bereitgestellt. Die Menge des vom Polymermaterial bereitgestellten Kohlenstoffs kann dadurch ermittelt werden, dass ein nach einer Beflammung entstandener Schaum im Hinblick auf seinen Kohlenstoffgehalt untersucht wird. Zieht man von dem ermittelten Kohlenstoffgehalt die Menge des von der Überzugsmasse bereitgestellten Kohlenstoffs ab, so erhält man die Menge des vom Polymermaterial gelieferten Kohlenstoffs.

Es hat sich herausgestellt, dass als Bestandteil des erfindungsgemäßen intumeszierenden Systems solche Polymermaterialien geeignet sind, bei denen eine Differenz Δ T zwischen einer Schmelztemperatur Tₛ und einer Kristallisationstemperatur T_{c} des Polymermaterials im Bereich von 55 bis 70 aufweist. Die Kristallisationstemperatur T_{c} ist zweckmäßigerweise ≤ 200°C, vorzugsweise ≤ 190°C. Weiter hat es sich als zweckmäßig erwiesen, das Polymermaterial so auszuwählen, dass die Schmelztemperatur Tₛ im Bereich von 50°C bis 400°C oder eine Zersetzungstemperatur im Bereich von 100°C bis 500°C liegt. Es hat sich gezeigt, dass Polymermaterialien mit den vorgenannten physikalischen Eigenschaften sich besonders gut als Kohlenstoff-liefernde Komponente im erfindungsgemäßen intumeszierenden System eignen. Es ist beobachtet worden, dass gerade bei solchen Polymermaterialien die Überzugsmasse im Brandfalle ins Innere des Polymermaterials eindringt und unter Mitwirkung des Polymermaterials eine flammlöschende Schaumentwicklung stattfindet. Versuche haben gezeigt, dass Polymermaterialien, welche eine Differenz Δ T von deutlich weniger als 40 K zwischen ihrer Schmelztemperatur Tₛ und ihrer Kristallisationstemperatur T_{c} aufweisen, weniger gut als Komponente für das intumeszierende System geeignet sind. - Das Polymermaterial kann aus der folgenden Gruppe ausgewählt sein: Polyester, Polyamid, Polyacrylat, Polyurethan, Polyacrylnitril, Aramide und Derivate der vorgenannten Polymere.

Nach einer weiteren Ausgestaltung ist das intumeszierende System eine Halogen- und/oder Schwermetall-freies System. Ein solches System entwickelt im Brandfalle keine besonders gesundheitsschädlichen Gase.

Als Überzugsmasse kommen grundsätzlich herkömmliche Überzugsmassen in Betracht, wobei allerdings auf den gesonderten Zusatz einer Kohlenstoff-liefernden Komponente verzichtet werden kann. Die Überzugsmasse enthält vorteilhafterweise ein Flammhemmmittel. Das erfindungsgemäße intumeszierende System hat sich eine Überzugsmasse der folgenden Zusammensetzung erwiesen:
25 bis 95 Gew.% einer Polyurethan oder Polyacrylat enthaltenden wässrigen Dispersion,
0,5 bis 10 Gew.% eines Isocyanats oder eines Melamin-Formaldehyds und
3 bis 15 Vol.% eines Flammhemmmittels.

Die vorgeschlagene Überzugsmasse weist im ausgehärteten Zustand eine hervorragende Transparenz auf. Die Überzugsmasse eignet sich insbesondere zur Imprägnierung oder Beschichtung von aus synthetischen organischen Fasern hergestellten Textilien. Der optische Eindruck der Textilie oder eines Aufdrucks derselben wird durch die erfindungsgemäße Überzugsmasse in keiner Weise beeinträchtigt. Es entsteht im Gegenteil eine hervorragende Brillanz, welche die Farbe der Textilie bzw. einen darauf vorgesehenen Aufdruck noch ansprechender erscheinen lässt.

Die die Textilie bildenden synthetischen organischen Fasern dienen in diesem Fall im intumeszierenden System als Kohlenstofflieferant. Es kann in Abkehr vom Stand der Technik auf eine den Kohlenstofflieferanten bildende Komponente in der Überzugsmasse verzichtet werden. Die Überzugsmasse gemäß der vorliegenden Erfindung ist so ausgebildet, dass sie in Kombination mit synthetischen organischen Fasern eine intumeszierende Textilie bildet. Damit kann im Vergleich zum Stand der Technik eine drastische Reduzierung des Flächengewichts der Textilie erreicht werden. Die Überzugsmasse weist in Zusammenwirken mit den synthetischen organischen Fasern eine hervorragende flammhemmende Wirkung auf. Sie eignet sich insbesondere zur Beschichtung von Textilien wie Vorhängen, Zeltplanen, Sonnenschirmen, Zelten, Markisen, Bekleidungsstücken und dgl..

Die Bildung eines flammhemmenden Kohlenstoffschaums wird insbesondere auf den Zusatz des als Vernetzungsmittel wirkenden Isocyanats oder Melamin-Formaldehyds zurückgeführt. Bei der Verwendung thermoplastischer organischer Fasern wird bei Erweichung der Fasern unter Hitzeeinwirkung eine weitere Vernetzung bewirkt. Das trägt nach derzeitigem Kenntnisstand wesentlich zur Bildung eines stabilen Kohlenstoffschaums bei.

Nach einer erfindungsgemäßen Ausgestaltung ist das Flammhemmmittel ein Säurespender, wobei der Säurespender Ammoniumpolyphosphat ist. Des Weiteren kann 0,1 bis 1,0 Gew.% eines Mittels zum Entlüften enthalten sein. Damit kann die Transparenz der durch die Überzugsmasse gebildeten Beschichtung weiter verbessert werden.

Des Weiteren können auch 0,1 bis 1,5 Gew.% eines Insektizids und/oder eines Bakterizids enthalten sein. Das erhöht die Lebensdauer der Textilie.

Das Polymermaterial kann in Form von Fasern oder daraus hergestellten Geweben oder Gewirken vorliegen. Abgesehen davon, können aus dem Polymermaterial auch andere eine Form bildende Körper hergestellt sein. Es kann sich dabei beispielsweise um Verkleidungen im Innenbereich von Fahrzeugen, Flugzeugen oder Schiffen, um Gehäuse von elektronischen oder elektrotechnischen Vorrichtungen, um Bauteile aus dem Bauwesen, beispielsweise Lüftungsrohre, Fensterrahmen, Kabelkanäle oder dgl., Bestandteile von Möbeln usw. handeln.

Nach weiterer Maßgabe ist die Verwendung eines die Form eines Körpers bildenden nicht-intumeszierenden Polymermaterials als Kohlenstoff-liefernden Komponente eines intumeszierenden Systems vorgesehen. Unter einem "eine Form eines Körpers bildenden Polymermaterial" wird ein Polymermaterial verstanden, welches in fester Form vorliegt und sich als Substrat zur Beschichtung mit einer Überzugsmasse eignet. Es kann sich bei dem Polymermaterial um Fasern, Gewebe, Gewirke oder Teile handeln.

Nach einer vorteilhaften Ausgestaltung sind weitere Komponenten des intumeszierenden Systems in einer auf das Polymermaterial aufgebrachten Überzugsmasse enthalten. Das erfindungsgemäß vorgeschlagene intumeszierende System besteht also zumindest aus zwei unterschiedlichen Stoffen, von denen einer das Polymermaterial und der andere die Überzugsmasse bildet.

Wegen der vorteilhaften Ausgestaltungen der Verwendung wird auf die vorgenannten Merkmale verwiesen, welche sinngemäß auch für die Verwendung gelten.

Nachfolgend werden Ausführungsbeispiele der Erfindung, insbesondere anhand der Zeichnungen näher erläutert. Es zeigen:
- Fig. 1: eine thermische Analyse des Aufheizens eines blauen Textils,
- Fig. 2: eine thermische Analyse des Abkühlens des blauen Textils,
- Fig.3: eine thermische Analyse des Aufheizens eines grünes Textils und
- Fig. 4: eine thermische Analyse des Abkühlens des grünen Textils.

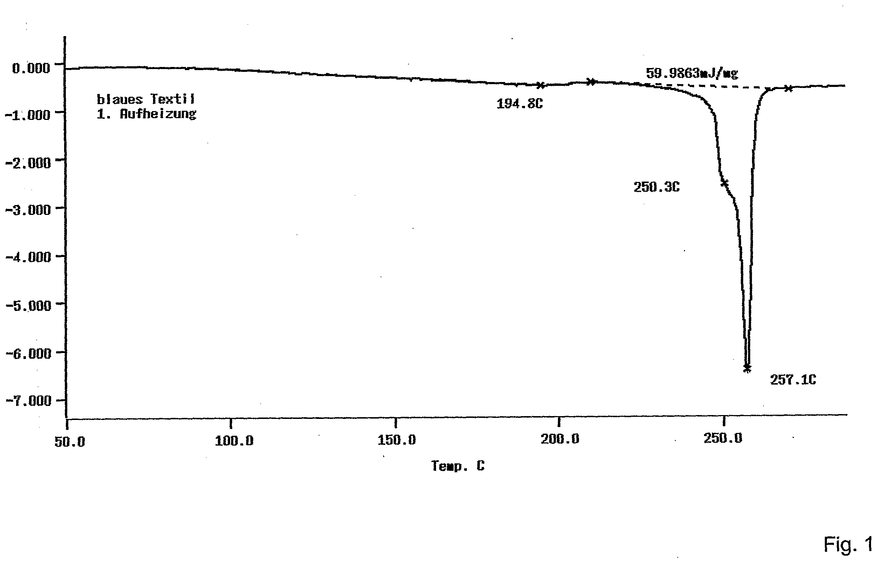

Bei den in Fig. 1 bis 4 gezeigten Ergebnissen handelt es sich um Ergebnisse einer dynamischen thermischen Analyse nach dem Verfahren der "Differential Scanning Calorimetry" (DSC). Die thermischen Analysen sind unter Verwendung des folgenden Temperaturprogramms durchgeführt worden:

| | |
|---|---|
| Aufheizrate: | 10°C/min |
| Starttemperatur: | 25°C |
| maximale Temperatur: | 300°C |
| Haltezeit bei der Maximaltemperatur: | 3 min |

Die Einwaage des grünen Textils hat 5,41 mg, die des blauen Textils 4,5 mg betragen. Sowohl beim blauen als auch beim grünen Textil handelt es sich um ein Textil, welches aus Polyesterfasern hergestellt worden ist. Die Polyesterfasern sind nicht mit einer Überzugsmasse beschichtet worden. Es handelt sich bei den untersuchten Polyesterfasern um Polyesterfasern mit einer unterschiedlichen Zusammensetzung.

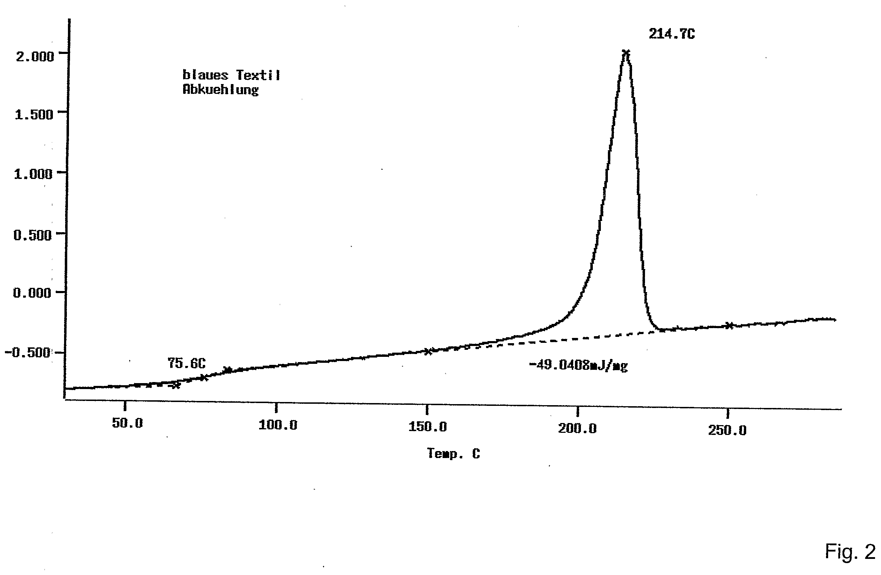

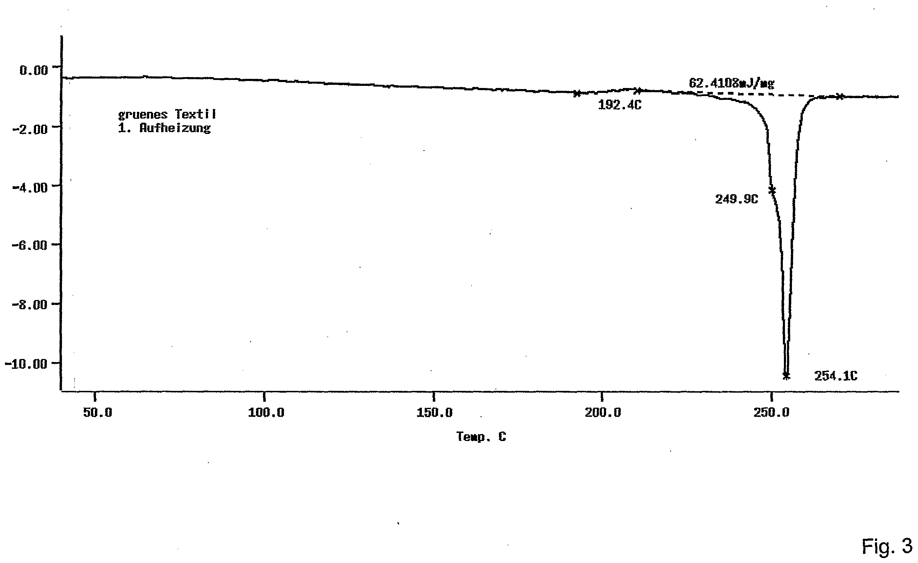

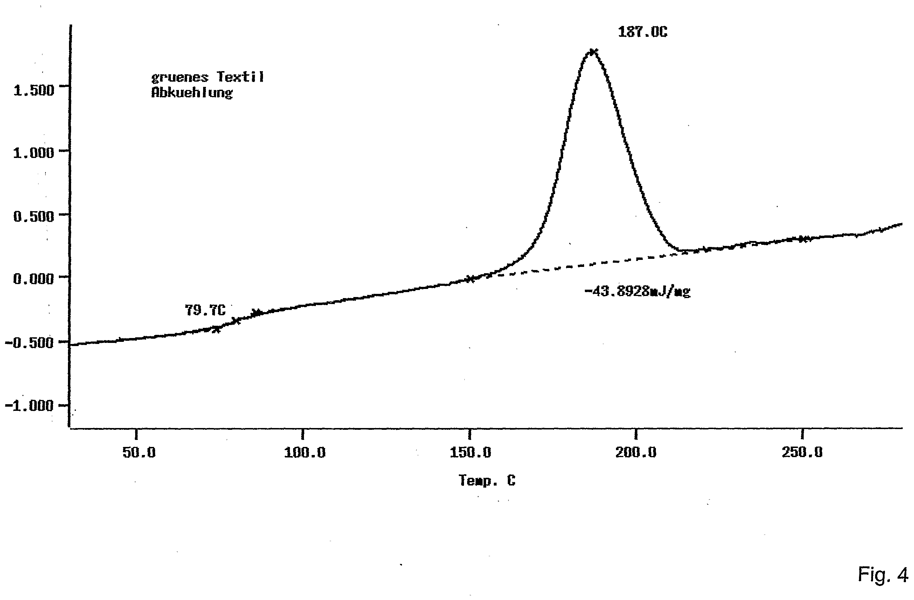

Aus Fig. 1 ist ersichtlich, dass die als blaues Textil bezeichnete Polyesterfaser eine Schmelztemperatur Tₛ von etwa 257°C aufweist. Wie aus Fig. 2 hervorgeht, liegt die Krisallisationstemperatur T_{c} bei etwa 215°C. Eine Differenz Δ T zwischen der Schmelztemperatur Tₛ und der Kristallisationstemperatur T_{c} beträgt in diesem Fall etwa 42°C. Das blaue Textil ist somit ein Referenztextil. Wie aus den Fig. 3 und 4 ersichtlich ist, weist das als grünes Textil bezeichnete Polymermaterial eine Schmelztemperatur Tₛ von 254°C und eine Kristallisationstemperatur von lediglich 187°C auf. Hier beträgt die Differenz Δ T zwischen der Schmelztemperatur Tₛ und der Kristallisationstemperatur T_{c} 67°C.

In weiteren Versuchen sind die als grünes und blaues Textil bezeichneten Polymermaterialien mit Überzugsmassen der folgenden Zusammensetzungen überzogen worden:

**Überzugsmasse A (= Grundmasse)**

| **Einwaage in g** | **Chemische Zusammensetzung** | **Markenname** | **Lieferant** | **Zweck** |
|---|---|---|---|---|
| 80 | Polyurethan | Impranil DLS | Bayer AG | Bindemittel |
| 20 | Wasser | | | |
| 0,5 | Polysiloxan | Agitan 256 | Münzing Chemie GmbH | Entschäumer |
| 1,5 | Polyurethan | Tafigel PUR 61 | Münzing Chemie GmbH | Verdicker |

Die vorgenannte Masse bildet eine Grundmasse, welche zur Herstellung intumeszierender Überzugsmassen dient. Der Grundmasse können weitere Komponenten zugesetzt sein, z. B. Fungizide und dgl.. Als Fungizid kann der Grundmasse beispielsweise 1 g Chinon AF der Firma Bode Chemie Hamburg zugesetzt sein.

**Überzugsmasse B**

| **Einwaage in g** | **Chemische Zusammensetzung** | **Markenname** | **Lieferant** | **Zweck** |
|---|---|---|---|---|
| 100 | Grundmasse | | | |
| 6 | Ammoniumpolyphosphat | Exolit AP 462 | Clariant Chemie | Säurespender |

**Überzugsmasse C**

| **Einwaage in g** | **Chemische Zusammensetzung** | **Markenname** | **Lieferant** | **Zweck** |
|---|---|---|---|---|
| 100 | Grundmasse | | | |
| 6 | Ammoniumpolyphosphat | Exolit AP 462 | Clariant GmbH | Säurespender |
| 2 | Isocyanat | Desmodur DA | Bayer AG | Vernetzer |

**Überzugsmasse D**

| **Einwaage in g** | **Chemische Zusammensetzung** | **Markenname** | **Lieferant** | **Zweck** |
|---|---|---|---|---|
| 100 | Grundmasse | | | |
| 6 | Ammoniumpolyphosphat | Exolit AP 462 | Clariant Chemie | Säurespender |
| 15 | Melamin | | CSC Jäckle Chemie GmbH | Treibmittel |
| 2 | Isocyanat | Desmodur DA | Bayer AG | Vernetzer |

**Überzugsmasse E**

| **Einwaage in g** | **Chemische Zusammensetzung** | **Markenname** | **Lieferant** | **Zweck** |
|---|---|---|---|---|
| 100 | Grundmasse | | | |
| 6 | Ammoniumpolyphosphat | Exolit AP 462 | Clariant Chemie | Säurespender |
| 15 | Melamin | | CSC Jäckle Chemie GmbH | Treibmittel |
| 2 | Isocyanat | Desmodur DA | Bayer AG | Vernetzer |
| 20 | Pentaerythrit | | CSC Jäckle Chemie GmbH | Kohlenstoffspender |

Die Überzugsmassen A bis E sind sowohl auf das blaue als auch auf das grüne Textil in einer Menge von 85 g/m² aufgetragen worden und zwar unter Verwendung einer Luftrakel bei einer Geschwindigkeit von 8 m/min. Zur Trocknung und Fixierung ist das mit der Überzugsmasse versehene Textil wie folgt thermisch behandelt worden:
Aufheizen auf 100°C, Haltezeit 2 min,
Aufheizen auf 130°C, Haltezeit 1 min,
Aufheizen auf 150°C, Haltezeit 1 min.

Anschließend sind die so beschichteten Polymermaterialien einer Beflammungsprüfung gemäß der in Deutschland gültigen Norm DIN 4102-B2 unterzogen worden. Es sind dabei die folgenden Parameter verwendet worden:

| Gas: | Propan |
|---|---|
| Abluftgeschwindigkeit: | 0,7 m/s |
| Flammenhöhe: | 20 mm |
| Abstand Textil/Flamme: | 16 mm |
| Beflammungszeit: | 15 s |

Unter Verwendung der Überzugsmassen A bis E gemäß der vorstehenden Tabellen sind bei der Beflammungsprüfung gemäß DIN 4102-B2 die aus der nachfolgenden Tabelle ersichtlichen Ergebnisse für das grüne Textil erzielt worden erzielt worden:

| Material | | | | | | | | | | |
|---|---|---|---|---|---|---|---|---|---|---|
| Beflammung | Kantentest Längsrichtung *) | | | | | Kantentest Querrichtung *) | | | | |
| Rezeptur-Nr. | A | B | C | D | E | A | B | C | D | E |
| Erreichen d. Messmarke 1) | 15 | 17 | . / . | . / . | . / . | 17 | 18 | . / . | . / . | . / . |
| Selbstverlöschen der Flammen, Ende des Nachbrennens | 42 | 35 | - 14 | 12 | 12 | 38 | 33 | 10 | 10 | 12 |

| | | | | | | | | | | |
|---|---|---|---|---|---|---|---|---|---|---|
| *) Zeitangaben in Sekunden ab Versuchsbeginn . / . Kein Auftreten des Ereignisses | | | | | | | | | | |

Es zeigt sich, dass das grüne Textil bereits mit der Überzugsmasse C die Kriterien der Beflammungsprüfung gemäß der Norm DIN 4102-B2 erfüllt. Die Überzugsmasse C enthält keinen Zusatz eines Kohlenstofflieferanten. Die Versuchsergebnisse zeigen klar, dass entsprechend der erfindungsgemäßen Lehre insbesondere auf einen Kohlenstofflieferanten in der Überzugsmasse verzichtet werden kann, wenn ein geeignetes Polymermaterial zur Herstellung des intumeszierenden Systems verwendet wird.

In der folgenden Tabelle sind die Ergebnisse wiedergegeben, die mit der Überzugsmasse C versehenen grünen und blauen Textilien bei der Brandschutzprüfung gemäß DIN 4102-B2 erzielt worden sind:

| **Versuchsparameter** | **Textil blau*)** | **Textil grün*)** |
|---|---|---|
| Erreichen der Messmarke 1/ Kantentest-Längsrichtung | 13 | . / . |
| Erreichen der Messmarke 1/ Kantentest-Querrichtung | 17 | . / . |
| Ende des Nachbrennens/ Kantentest-Längsrichtung | 60 | 14 |
| Ende des Nachbrennens/ Kantentest-Querrichtung | 45 | 10 |

| | | |
|---|---|---|
| *) Zeitangaben in Sekunden ab Versuchsbeginn . / . kein Auftreten des Ereignisses | | |

In einem weiteren Referenzversuch ist ein weiteres Polymermaterial untersucht worden. Es handelt sich dabei um ein aus Polyamid hergestelltes Gewebe mit einem Flächengewicht von 60 g/m². Das Polyamid-Gewebe ist unter den vorgenannten Beschichtungsbedingungen mit den in den folgenden Tabellen beschriebenen Überzugsmassen A1 bis E1 in einer Menge von 85 g/m² beschichtet worden.

**Überzugsmasse A1 (= Grundmasse 1)**

| **Einwaage in g** | **Chemische Zusammensetzung** | **Markenname** | **Lieferant** | **Zweck** |
|---|---|---|---|---|
| 80 | Polyurethan | Impranil DLF | Bayer AG | Bindemittel |
| 20 | Wasser | | | |
| 0,5 | Polysiloxan | Agitan 256 | Münzing Chemie GmbH | Entschäumer |
| 1,5 | Polyurethan | Tafigel PUR 61 | Münzing Chemie GmbH | Verdicker |

Die vorgenannte Masse bildet eine Grundmasse 1, welche zur Herstellung intumeszierender Überzugsmassen dient. Der Grundmasse können weitere Komponenten zugesetzt sein, z. B. Fungizide und dgl.. Als Fungizid kann der Ausgangsmasse beispielsweise 1 g Chinon AF der Firma Bode Chemie Hamburg zugesetzt sein.

**Überzugsmasse B1**

| **Einwaage in g** | **Chemische Zusammensetzung** | **Markenname** | **Lieferant** | **Zweck** |
|---|---|---|---|---|
| 100 | Grundmasse 1 | | | |
| 6 | Ammoniumpolyphosphat | Exolit AP 462 | Clariant Chemie | Säurespender |

**Überzugsmasse C1**

| **Einwaage in g** | **Chemische Zusammensetzung** | **Markenname** | **Lieferant** | **Zweck** |
|---|---|---|---|---|
| 100 | Grundmasse 1 | | | |
| 6 | Ammoniumpolyphosphat | Exolit AP 462 | Clariant GmbH | Säurespender |
| 2 | Isocyanat | Desmodur DA | Bayer AG | Vernetzer |

**Überzugsmasse D1**

| **Einwaage in g** | **Chemische Zusammensetzung** | **Markenname** | **Lieferant** | **Zweck** |
|---|---|---|---|---|
| 100 | Grundmasse 1 | | | |
| 6 | Ammoniumpolyphosphat | Exolit AP 462 | Clariant Chemie | Säurespender |
| 15 | Melamin | | CSC Jäckle Chemie GmbH | Treibmittel |
| 2 | Isocyanat | Desmodur DA | Bayer AG | Vernetzer |

**Überzugsmasse E1**

| **Einwaage in g** | **Chemische Zusammensetzung** | **Markenname** | **Lieferant** | **Zweck** |
|---|---|---|---|---|
| 100 | Grundmasse 1 | | | |
| 6 | Ammoniumpolyphosphat | Exolit AP 462 | Clariant Chemie | Säurespender |
| 15 | Melamin | | CSC Jäckle Chemie GmbH | Treibmittel |
| 2 | Isocyanat | Desmodur DA | Bayer AG | Vernetzer |
| 20 | Pentaerythrit | | CSC Jäckle Chemie GmbH | Kohlenstoffspender |

Das mit den Überzugsmassen A1 bis E1 beschichtete Polyamid-Gewebe ist entsprechend den vorbeschriebenen Bedingungen einer Beflammungsprüfung gemäß DIN 4102-B2 unterzogen worden. Dabei sind die aus der nachfolgenden Tabelle ersichtlichen Ergebnisse erzielt worden:

| Material | | | | | | | | | | |
|---|---|---|---|---|---|---|---|---|---|---|
| Beflammung | Kantentest Längsrichtung *) | | | | | Kantentest Querrichtung *) | | | | |
| Rezeptur-Nr. | A1 | B1 | C1 | D1 | E1 | A1 | B1 | C1 | D1 | E1 |
| Erreichen d. Messmarke 1) | 12 | 15 | . / . | . / . | . / . | 17 | 18 | . / . | . / . | . / . |
| Selbstverlöschen der Flammen, Ende des Nachbrennens | 33 | 37 | 12 | 10 | 10 | 38 | 33 | 8 | 12 | 10 |

| | | | | | | | | | | |
|---|---|---|---|---|---|---|---|---|---|---|
| *) Zeitangaben in Sekunden ab Versuchsbeginn . / . Kein Auftreten des Ereignisses | | | | | | | | | | |

Die Ergebnisse zeigen klar, dass auch Polyamid sich als Polymermaterial zur Herstellung des erfindungsgemäßen intumeszierenden Systems eignet. Auch bei der Verwendung von Polyamid ist es ausreichend, das Polymermaterial mit der Überzugsmasse C1 zu beschichten, um eine ausreichende intumeszierende Wirkung zu erzielen. Es kann in der Überzugsmasse insbesondere auf einen Zusatz von Treibmittel und Kohlenstoffspender verzichtet werden.

In einem weiteren Referenzversuch ist als Polymermaterial ein aus Polyacrylat-Superabsorber-Faser "Oasis Typ 102" hergestelltes Gewebe mit einem Flächengewicht von 90 g/m² verwendet worden. Dieses Gewebe ist unter den vorgenannten Beschichtungsbedingungen mit den in den nachfolgenden Tabellen beschriebenen Überzugsmassen A2 bis E2 in einer Menge von 65 g/m² beschichtet worden:

**Überzugsmasse A2 (= Grundmasse 2)**

| **Einwaage in g** | **Chemische Zusammensetzung** | **Markenname** | **Lieferant** | **Zweck** |
|---|---|---|---|---|
| 100 | Polyurethan | Impranil ELH | Bayer AG | Bindemittel |

Die vorgenannte Masse bildet eine Grundmasse 2, welche zur Herstellung intumeszierender Überzugsmassen dient. Der Grundmasse 2 können weitere Komponenten zugesetzt sein, z. B. Fungizide und dgl..

**Überzugsmasse B2**

| **Einwaage in g** | **Chemische Zusammensetzung** | **Markenname** | **Lieferant** | **Zweck** |
|---|---|---|---|---|
| 100 | Grundmasse 2 | | | |
| 6 | Ammoniumpolyphosphat | Exolit AP 462 | Clariant Chemie | Säurespender |

**Überzugsmasse C2**

| **Einwaage in g** | **Chemische Zusammensetzung** | **Markenname** | **Lieferant** | **Zweck** |
|---|---|---|---|---|
| 100 | Grundmasse 2 | | | |
| 6 | Ammoniumpolyphosphat | Exolit AP 462 | Clariant GmbH | Säurespender |
| 2 | Isocyanat | Additiv Z | Bayer AG | Vernetzer |

**Überzugsmasse D2**

| **Einwaage in g** | **Chemische Zusammensetzung** | **Markenname** | **Lieferant** | **Zweck** |
|---|---|---|---|---|
| 100 | Grundmasse 2 | | | |
| 6 | Ammoniumpolyphosphat | Exolit AP 462 | Clariant Chemie | Säurespender |
| 15 | Melamin | | CSC Jäckle Chemie GmbH | Treibmittel |
| 2 | Isocyanat | Additiv Z | Bayer AG | Vernetzer |

**Überzugsmasse E2**

| **Einwaage in g** | **Chemische Zusammensetzung** | **Markenname** | **Lieferant** | **Zweck** |
|---|---|---|---|---|
| 100 | Grundmasse 2 | | | |
| 6 | Ammoniumpolyphosphat | Exolit AP 462 | Clariant Chemie | Säurespender |
| 15 | Melamin | | CSC Jäckle Chemie GmbH | Treibmittel |
| 2 | Isocyanat | Additiv Z | Bayer AG | Vernetzer |
| 20 | Pentaerythrit | | CSC Jäckle Chemie GmbH | Kohlenstoffspender |

Die mit den Überzugsmassen A2 bis E2 versehenen aus Polyacrylat-Superabsorber-Faser "Oasis Typ 102" hergestellten Proben sind wiederum der Beflammungsprüfung gemäß DIN 4102-B2 unterzogen worden. Die dabei erzielten Ergebnisse sind in der nachfolgenden Tabelle wiedergegeben:

| Material | | | | | | | | | | |
|---|---|---|---|---|---|---|---|---|---|---|
| Beflammung | Kantentest Längsrichtung *) | | | | | Kantentest Querrichtung *) | | | | |
| Rezeptur-Nr. | A2 | B2 | C2 | D2 | E2 | A2 | B2 | C2 | D2 | E2 |
| Erreichen d. Messmarke 1) | 17 | 16 | . / . | . / . | . / . | 16 | 16 | . / . | . / . | . / . |
| Selbstverlöschen der Flammen, Ende des Nachbrennens | 44 | 39 | 6 | 7 | 6 | 35 | 34 | 8 | 7 | 7 |

| | | | | | | | | | | |
|---|---|---|---|---|---|---|---|---|---|---|
| *) Zeitangaben in Sekunden ab Versuchsbeginn . / . Kein Auftreten des Ereignisses | | | | | | | | | | |

Die Ergebnisse zeigen, dass auch Polyacrylat-Superabsorber-Faser "Oasis Typ 102" ein geeignetes Polymermaterial ist, welches mit einer einfach zusammengesetzten Überzugsmasse C2 zu einem intumeszierenden System kombiniert werden kann. Auch bei Verwendung dieses Polymermaterials ist es nicht erforderlich, der Überzugsmasse einen Kohlenstofflieferanten hinzuzusetzen.

Die Überzugsmassen C, C1 und C2 weisen eine hervorragende Transparenz auf. Ein auf der Textilie aufgebrachter Aufdruck erscheint brillant und ist ohne jegliche Beeinträchtigung sichtbar. Das gilt sogar für einen auf beiden Seiten der Textilie sichtbarer Durchdruck. Die Textilie weist ein Flächengewicht von weniger als 300 g/m² auf. Bei Einwirkung von Hitze oder Flammen schäumt das Material unter Bildung eines Kohlenstoffschaums auf, der eine weitere Flammentwicklung unterbindet.

Indem die vorgeschlagene intumeszierende Textilie das die Textilie selbst bildende Material als Kohlenstofflieferant zur Herstellung eines Kohlenstoffschaums bei Flammeinwirkung benutzt, kann eine wesentliche Verringerung des Flächengewichts erreicht werden. Die intumeszierenden Eigenschaften sind gleichwohl hervorragend.

## Patentansprüche

1. Intumeszierender Körper hergestellt aus einem die Form des Körpers bildenden nicht-intumeszierenden Polymermaterial, welches eine Differenz ΔT zwischen einer Schmelztemperatur Tₛ und einer Kristallisationstemperatur T_{c} des Polymermaterials im Bereich von 55 bis 70 K aufweist, und einer auf das Polymermaterial aufgebrachten transparenten Überzugsmasse,
wobei die Überzugsmasse die folgende Zusammensetzung aufweist:
25 bis 95 Gew.% einer Polyurethan oder Polyacrylat enthaltenden wässrigen Dispersion,
0,5 bis 10 Gew.% eines Isocyanats oder eines Melamin-Formaldehyds und
3 bis 15 Gew.% Ammoniumpolyphosphat als Flammhemmmittel,
wobei das Polymermaterial zusammen mit der Überzugsmasse ein intumeszierendes System ergibt, bei dem die Überzugsmasse im Brandfalle ins Innere des eine Kohlenstoff-lieferende Komponente bildenden Polymermaterials eindringt und unter Mitwirkung des Polymermaterials eine flammlöschende Schaumentwicklung stattfindet, wobei das Polymermaterial einen Anteil von zumindest 20 Gew.% des Kohlenstoffs im intumeszierenden System bereitstellt.

2. Intumeszierender Körper nach Anspruch 1, wobei das Polymermaterial einen Kohlenstoffgehalt von ≥ 20 Gew.% aufweist.

3. Intumeszierender Körper nach einem der vorhergehenden Ansprüche, wobei die Kristallisationstemperatur T_{c} ≤ 200°C, vorzugsweise ≤ 190°C, ist.

4. Intumeszierender Körper nach einem der vorhergehenden Ansprüche, wobei das Polymermaterial eine Schmelztemperatur Tₛ im Bereich von 50°C bis 400°C oder eine Zersetzungstemperatur im Bereich von 150°C bis 500°C aufweist.

5. Intumeszierender Körper nach einem der vorhergehenden Ansprüche, wobei das intumeszierende System ein Halogen- und/oder Schwermetall-freies System ist.

6. Intumeszierender Körper nach einem der vorhergehenden Ansprüche, wobei das Polymermaterial aus der folgenden Gruppe ausgewählt ist: Polyester, Polyamid, Polyacrylat, Polyurethan, Polyacrylnitril, Aramide und Derivate der vorgenannten Polymere.

7. Intumeszierender Körper nach einem der vorhergehenden Ansprüche, wobei des Weiteren 0,1 bis 1,0 Gew.% eines Mittels zum Entlüften enthalten sind.

8. Intumeszierender Körper nach einem der vorhergehenden Ansprüche, wobei des Weiteren 0,1 bis 1,5 Gew.% eines Insektizids und/oder eines Bakterizids enthalten sind.

9. Intumeszierender Körper nach einem der vorhergehenden Ansprüche, wobei das Polymermaterial in Form von Fasern oder daraus hergestellten Geweben, Gewirken vorliegt.

## Claims

1. Intumescent body made of a non-intumescent polymer material providing the form of the body, wherein a difference ΔT between a melting temperature Tₛ and a crystallization temperature T_{c} of the polymer material is in the range of 55 to 70 K, and a transparent coating mass applied to the polymer material,
wherein the coating mass has the following composition:
25 to 95 weight % of an aqueous dispersion containing polyurethane or polyacrylat,
0,5 to 10 weight % of an isocyanate or a melamine-formaldehyde and
3 to 15 weight % ammonium polyphosphate as flame retarding agent,
wherein together with the coating mass, the polymer material results in an intumescent system in which the coating mass penetrates the interior of the polymer material, which forms a carbon-donor component, during a fire and flame-extinguishing foam is created with the acid of the polymer material, wherein the polymer material provides a share of at least 20 weight % of the carbon in the intumescent system.

2. Intumescent body as defined in claim 1, wherein the polymer material has a carbon content of ≥ 20 weight %.

3. Intumescent body as defined in one of the preceding claims, wherein the crystallization temperature T_{c} is < 200 °C, preferably ≤ 190 °C.

4. Intumescent body as defined in one of the preceding claims, wherein the polymer material has a melting temperature Tₛ in the range of 50 °C to 400 °C or a decomposition temperature in the range of 150 °C to 500 °C.

5. Intumescent body as defined in one of the preceding claims, wherein the intumescent system is a halogen-free and/or heavy metal-free system.

6. Intumescent body as defined in one of the preceding claims, wherein the polymer material is selected from the following group: polyester, polyamide, polyacrylat, polyurethane, polyacrylnitril, aramids and derivatives of the aforementioned polymers.

7. Intumescent body as defined in one of the preceding claims, wherein, in addition, 0,1 to 1,0 weight % of an agent for deaeration are included.

8. Intumescent body as defined in one of the preceding claims, wherein, in addition, 0,1 to 1,5 weight % of an insecticide and/or a bactericidin are included.

9. Intumescent body as defined in one of the preceding claims, wherein the polymer material is present in the form of fibers or woven cloth, knitted fabric made thereof.

## Revendications

1. Élément intumescent réalisé à partir d'un matériau polymère non intumescent donnant forme à l'élément, ledit matériau présentant une différence ΔT entre une température de fusion Tₛ et une température de cristallisation T_{c} du matériau polymère dans une plage comprise entre 55 et 70 K, et une couverture transparente appliquée sur le matériau polymère,
en ce que la couverture consiste en la composition suivante:
25 à 95 % en poids d'une dispersion aqueuse contenant du polyuréthane ou du polyacrylate,
0,5 à 10 % en poids d'un isocyanate ou d'un mélamine-formaldéhyde et
3 à 15 % en poids de polyphosphate d'ammonium comme retardateur de flamme,
en ce que le matériau polymère forme avec la couverture un système intumescent, dans lequel la couverture en cas d'incendie pénètre à l'intérieur du matériau polymère constituant un composant fournissant du carbone et un développement de mousse à extinction de flamme se produit par l'intermédiaire du matériau polymère, en ce que le matériau polymère met à disposition un pourcentage d'au moins 20 % en poids du carbone dans le système intumescent.

2. Élément intumescent selon la revendication 1, en ce que le matériau polymère a une teneur en carbone de ≥ 20 % en poids.

3. Élément intumescent selon l'une des revendications précédentes, en ce que la température de cristallisation T_{c} est ≤ 200 °C, de préférence ≤ 190 °C.

4. Élément intumescent selon l'une des revendications précédentes, en ce que le matériau polymère a une température de fusion Tₛ dans une plage comprise entre 50 °C et 400 °C ou une température de décomposition dans une plage comprise entre 150 °C et 500 °C.

5. Élément intumescent selon l'une des revendications précédentes, en ce que le système intumescent est un système sans halogène et/ou sans métal lourd.

6. Élément intumescent selon l'une des revendications précédentes, en ce que le matériau polymère est sélectionné parmi le groupe suivant : polyester, polyamide, polyacrylate, polyuréthane, polyacrylonitrile, aramides et dérivés des polymères précités.

7. Élément intumescent selon l'une des revendications précédentes, en ce qu'en outre 0,1 à 1,0 % en poids d'une substance est contenu pour le dégazage.

8. Élément intumescent selon l'une des revendications précédentes, en ce qu'en outre 0,1 à 1,5 % en poids d'un insecticide et/ou d'un bactéricide sont contenus.

9. Élément intumescent selon l'une des revendications précédentes, en ce que le matériau polymère se présente sous la forme de fibres ou de tissus, tissus à mailles réalisés à partir de celles-ci.
